# EUROPEAN PATENT APPLICATION

(11) **EP 4 353 409 A1**
(43) Date of publication of application: **17.04.2024**
(21) Application number: 22819861.0
(22) Date of filing: 15.03.2022
(51) Int. Cl.: B23Q 11/00, B23Q 11/10, B23Q 17/00

(54) **MACHINE TOOL, CONTROL METHOD, AND CONTROL PROGRAM**

(30) Priority: 09.06.2021 JP 2021096390
(71) Applicant: DMG Mori Co., Ltd., Yamatokoriyama-shi, Nara 639-1160 (JP)
(72) Inventor: YAMAMOTO, Kosuke, Yamatokoriyama-shi Nara 639-1160 (JP)
(74) Representative: Grünecker Patent- und Rechtsanwälte PartG mbB
(86) International application number: PCT/JP2022/011539
(87) International publication number: WO 2022/259671

(57) **Abstract**

A machine tool (100) includes: a cover body (130) defining a processing area inside the machine tool (100); an ejection part (125) configured to eject a coolant into the processing area; a mist collector (40) configured to collect a substance included in air as a result of the coolant being ejected from the ejection part (125) into the processing area; a sensor (80) provided outside the processing area and configured to detect the substance; and a mist collector control unit (154) configured to cause the mist collector (40) to start collection processing for collecting the substance when the substance is detected by the sensor (80).

## Description

### Technical Field

The present disclosure relates to a technology for controlling a mist collector included in a machine tool.

### Background Art

When a machine tool processes a workpiece with use of a tool, heat is generated. In order to suppress the generation of heat, the machine tool ejects a coolant onto the workpiece. At this time, the coolant vaporizes and mist is generated in the machine tool.

Japanese Patent No. 6836683 (Patent Document 1) discloses a machine tool that includes a mist collector. The mist collector collects mist generated in the machine tool.

### Citation List

### Patent Document

Patent Document 1: Japanese Patent No. 6836683

### Summary of Invention

### Technical Problem

The mist collector collects not only mist generated in the machine tool but also various minute substances floating in the air, such as chips from a workpiece. When the mist collector is not operating, the minute substances may pass through a gap in the machine tool and leak to the outside of the machine tool.

In order to surely prevent the leakage of minute substances to the outside of the machine tool, the mist collector has to be constantly driven. However, if the mist collector is constantly driven, a large amount of power is consumed by the mist collector. Therefore, there is demand for a technology for reducing power consumption by the mist collector. Note that the machine tool disclosed in Patent Document 1 does not disclose anything about such a technology.

### Solution to Problem

In an example of the present disclosure, a machine tool includes: a cover body defining a processing area inside the machine tool; an ejection part configured to eject a coolant into the processing area; a mist collector configured to collect a substance included in air as a result of the coolant being ejected from the ejection part into the processing area; a sensor provided outside the processing area and configured to detect the substance; and a mist collector control unit configured to cause the mist collector to start collection processing for collecting the substance when the substance is detected by the sensor.

In an example of the present disclosure, the sensor is provided inside the machine tool and outside the processing area.

In an example of the present disclosure, the machine tool further includes a collection mechanism configured to collect the coolant ejected from the ejection part into the processing area. The collection mechanism is continuous to the processing area inside the machine tool. The sensor is provided inside the collection mechanism.

In an example of the present disclosure, the sensor is provided outside the machine tool.

In an example of the present disclosure, when the substance is no longer detected by the sensor, the mist collector control unit controls the mist collector such that an amount of the substance collected by the mist collector per unit time becomes smaller than that during a period for which the substance has been detected by the sensor.

In another example of the present disclosure, a control method for controlling a machine tool is provided. The machine tool includes: a cover body defining a processing area inside the machine tool; an ejection part configured to eject a coolant into the processing area; a mist collector configured to collect a substance included in air as a result of the coolant being ejected from the ejection part into the processing area; and a sensor provided outside the processing area and configured to detect the substance. The control method includes: a step of acquiring output from the sensor; and a step of starting collection processing for collecting the substance using the mist collector when the output indicates that the substance has been detected.

In another example of the present disclosure, a control program for controlling a machine tool is provided. The machine tool includes: a cover body defining a processing area inside the machine tool; an ejection part configured to eject a coolant into the processing area; a mist collector configured to collect a substance included in air as a result of the coolant being ejected from the ejection part into the processing area; and a sensor provided outside the processing area and configured to detect the substance. The control program causes the machine tool to execute: a step of acquiring output from the sensor; and a step of starting collection processing for collecting the substance using the mist collector when the output indicates that the substance has been detected.

The above-described object, other objects, features, aspects, and advantages of the present invention will be clarified by the following detailed description of the present invention to be understood in connection with the attached drawings.

### Brief Description of the Drawings

FIG. 1 is a diagram showing an appearance of a machine tool.
FIG. 2 is a diagram showing the inside of the machine tool.
FIG. 3 is a diagram showing the inside of the machine tool as viewed from a direction different from the direction of the view shown in FIG. 2.
FIG. 4 is a diagram showing a configuration example of drive mechanisms of the machine tool.
FIG. 5 is a diagram showing a cross section of a mist collector shown in FIG. 1.
FIG. 6 is a diagram showing an appearance of a collection mechanism.
FIG. 7 is a diagram showing a cross section of the collection mechanism.
FIG. 8 is a diagram showing an example of an installation site of a mist sensor.
FIG. 9 is a diagram showing an example of a functional configuration of the machine tool.
FIG. 10 is a graph showing an example of the manner in which the mist collector is controlled.
FIG. 11 is a graph showing another example of the manner in which the mist collector is controlled.
FIG. 12 is a diagram showing a relationship between a value output by the mist sensor and a rotational speed of a fan included in the mist collector.
FIG. 13 is a diagram showing an example of a hardware configuration of a CPU (Central Processing Unit) unit.
FIG. 14 is a diagram showing an example of a hardware configuration of a CNC (Computer Numerical Control) unit.
FIG. 15 is a flowchart showing a part of processing executed by a control unit of the machine tool.
FIG. 16 is a diagram showing another example of the installation site of the mist sensor.

### Description of Embodiments

The following describes an embodiment according to the present invention with reference to the drawings. In the following description, the same components and the same constitutional elements are denoted by the same reference numeral. Those components and constitutional elements have the same name and the same function. Accordingly, detailed descriptions of those components and constitutional elements are not repeated. The following embodiment and variations can be selectively combined as appropriate.

### A. Appearance of Machine Tool 100

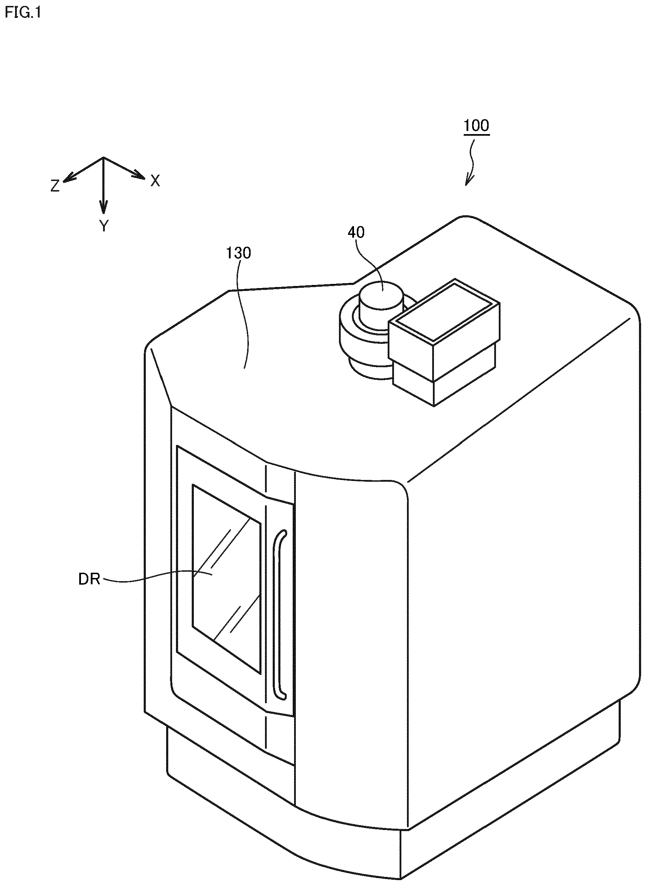

The following describes a machine tool 100 according to an embodiment with reference to FIG. 1. FIG. 1 is a diagram showing an appearance of the machine tool 100.

The "machine tool" as used in the present specification is a concept that encompasses various apparatuses having functions for processing a workpiece. In the present specification, a horizontal machining center is described as an example of the machine tool 100, but the machine tool 100 is not limited to this example. For example, the machine tool 100 may also be a vertical machining center. Alternatively, the machine tool 100 may be a lathe, an additive processing machine, or any other cutting machine or grinding machine. Furthermore, the machine tool 100 may be a combined machine obtained by combining these machines.

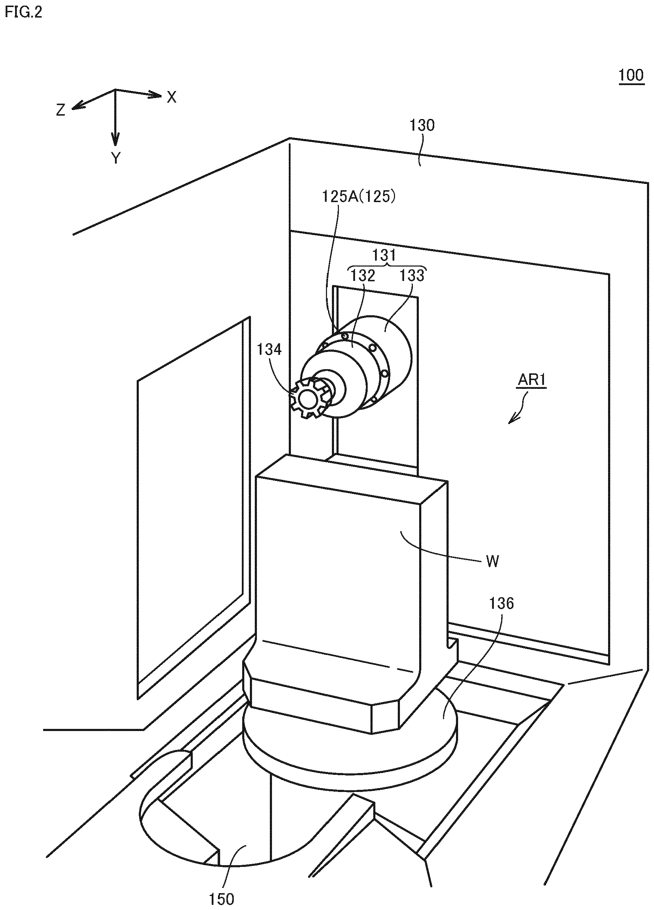

As shown in FIG. 1, the machine tool 100 includes a mist collector 40 and a cover body 130. The cover body 130 is also called a "splash guard", forms the appearance of the machine tool 100, and defines a processing area AR1 (see FIG. 2) for a workpiece W.

The cover body 130 also includes a door DR. A worker places a workpiece that is to be processed into the cover body 130 in the state where the door DR is open. After placing the workpiece, the worker closes the door DR.

The mist collector 40 is provided at a position higher than the cover body 130 in the vertical direction, for example. In the example shown in FIG. 1, the mist collector 40 is coupled to a ceiling portion of the cover body 130. The mist collector 40 collects substances (hereinafter also referred to as "minute substances") included in air inside the machine tool 100 and prevents the minute substances inside the cover body 130 from leaking to the outside of the machine tool 100. Examples of minute substances collected by the mist collector 40 include mist generated as a result of a coolant being ejected, minute chips generated as a result of a workpiece being processed, and other foreign matters floating in the air.

### B. Internal Configuration of Machine Tool 100

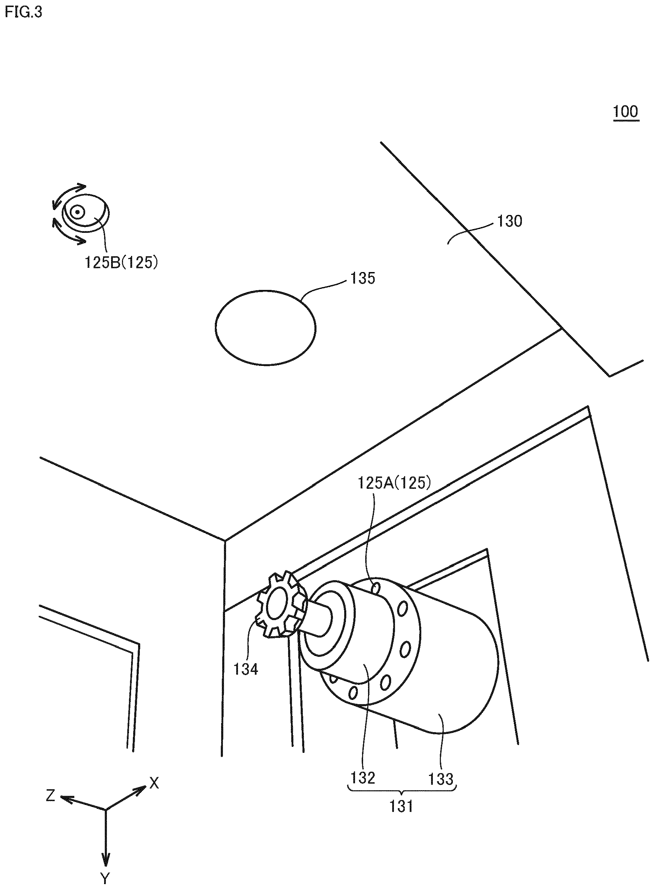

Next, the following describes an internal configuration of the machine tool 100 with reference to FIGS. 2 and 3. FIG. 2 is a diagram showing the inside of the machine tool 100. FIG. 3 is a diagram showing the inside of the machine tool 100 as viewed from a direction different from the direction of the view shown in FIG. 2.

As shown in FIGS. 2 and 3, the machine tool 100 includes an ejection part 125 from which a coolant is ejected, a spindle head 131, a tool 134, a table 136, and a collection mechanism 150 therein. The spindle head 131 includes a spindle 132 and a housing 133.

Hereinafter, the axial direction of the spindle 132 will also be referred to as a "Z-axis direction", for the sake of convenience of description. The gravitational direction will also be referred to as a "Y-axis direction". A direction orthogonal to both the Y-axis direction and the Z-axis direction will be referred to as an "X-axis direction".

The ceiling of the cover body 130 includes an opening 135. The above-described mist collector 40 is disposed so as to cover the opening 135. With this configuration, the mist collector 40 collects minute substances included in air from the processing area AR1 via the opening 135.

The ejection part 125 is provided inside the machine tool 100 and ejects a coolant to discharge chips generated through processing of the workpiece W to the collection mechanism 150. The ejection part 125 is constituted by one or more ejection mechanisms. FIGS. 2 and 3 show ejection mechanisms 125A and 125B as an example of the ejection part 125.

The ejection mechanism 125A is provided in the spindle head 131. The ejection mechanism 125A may be of a side through type that ejects the coolant from an end face of the spindle 132 through the housing 133 of the spindle head 131 or a center through type that ejects the coolant from an edge of a blade of the tool held by the spindle head 131 through the spindle center of the spindle head 131. The ejection mechanism 125A mainly ejects the coolant toward a processing point on the workpiece to remove chips attaching to the spindle 132 and the tool 134 and suppress generation of heat at the processing point on the workpiece. The ejection mechanism 125A is configured to be capable of being driven in a rotation direction about the X axis (i.e., in an A-axis direction) and in a rotation direction about the Z axis (i.e., in a C-axis direction). With this configuration, the ejection mechanism 125A changes an ejecting direction of the coolant in the A-axis direction and the C-axis direction.

The ejection mechanism 125B is provided above the ejection mechanism 125A. The ejection mechanism 125B is attached to the ceiling portion of the cover body 130, for example. The ejection mechanism 125B mainly ejects the coolant from the cover body 130 throughout the processing area AR1.

The spindle 132 is provided in the housing 133. A tool for processing the workpiece W, which is a processing target, is attached to the spindle 132. In the example shown in FIGS. 2 and 3, the tool 134 used for milling of the workpiece W is attached to the spindle 132.

The collection mechanism 150 discharges chips generated through processing of the workpiece W to the outside of the processing area AR1. Also, the collection mechanism 150 collects the coolant ejected from the ejection part 125 into the processing area AR1.

### C. Drive Mechanism of Machine Tool 100

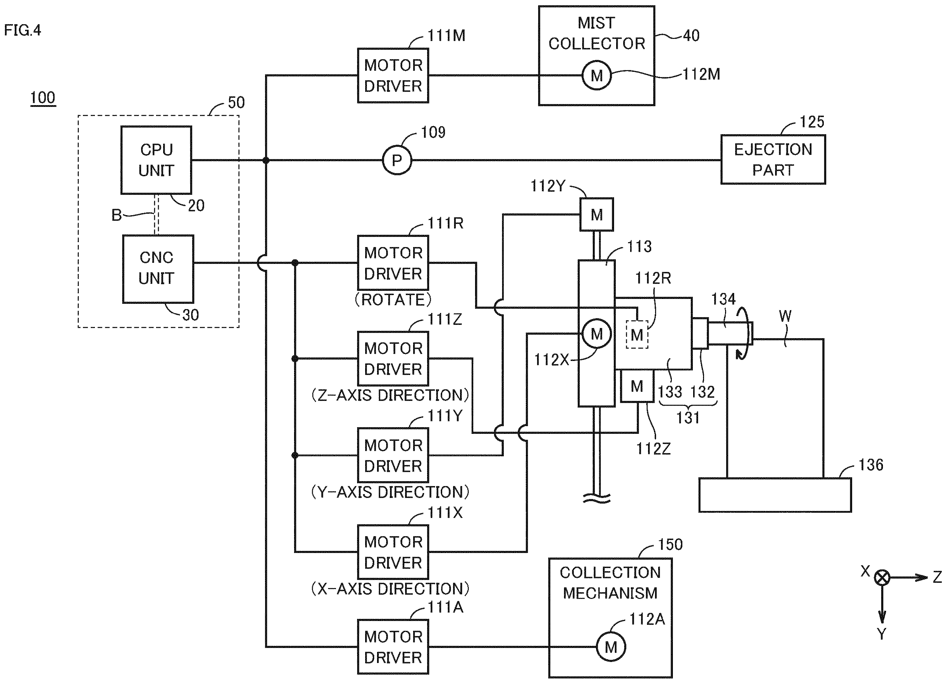

Next, the following describes various drive mechanisms of the machine tool 100 with reference to FIG. 4. FIG. 4 is a diagram showing a configuration example of drive mechanisms of the machine tool 100.

As shown in FIG. 4, the machine tool 100 includes a control unit 50, a pump 109, motor drivers 111A, 111R, and 111X to 111Z, motors 112A, 112R, and 112X to 112Z, a movable body 113, the ejection mechanisms 125A and 125B, the spindle head 131, the tool 134, and the table 136.

The term "control unit 50" as used in the present specification means a device that controls the machine tool 100. There is no limitation to the device configuration of the control unit 50. The control unit 50 may be constituted by a single control unit or a plurality of control units. In the example shown in FIG. 4, the control unit 50 is constituted by a CPU unit 20 that is a PLC (Programmable Logic Controller) and a CNC unit 30. The CPU unit 20 and the CNC unit 30 communicate with each other via a communication path B (e.g., a field bus or a LAN cable).

The CPU unit 20 controls various units included in the machine tool 100 in accordance with a PLC program designed in advance. The PLC program is written by a ladder program, for example.

For example, the CPU unit 20 controls a motor driver 111M included in the mist collector 40 in accordance with the PLC program. The motor driver 111M receives input of a target rotational speed of a motor 112M from the CPU unit 20, and controls the motor 112M. Thus, driving of the mist collector 40 is switched ON and OFF, and a mist suction amount of the mist collector 40 is controlled, for example. The motor 112M may be an AC motor, a stepping motor, a servomotor, or any other type of motor.

In another example, the CPU unit 20 controls the pump 109 in accordance with the PLC program to control ejection of the coolant from the ejection part 125. Thus, ejection of the coolant is switched ON and OFF, and a coolant ejection amount is controlled, for example.

In another example, the CPU unit 20 controls the motor driver 111A in accordance with the PLC program. The motor driver 111A receives input of a target rotational speed of the motor 112A from the CPU unit 20, and controls the motor 112A. Thus, driving of the collection mechanism 150 is switched ON and OFF, and a chip conveying speed of the collection mechanism 150 is controlled, for example. The motor 112A may be an AC motor, a stepping motor, a servomotor, or any other type of motor.

The CNC unit 30 starts to execute a processing program designed in advance upon receiving a processing start instruction from the CPU unit 20. The processing program is written by a NC (Numerical Control) program, for example. The CNC unit 30 controls the motor drivers 111R and 111X to 111Z in accordance with the processing program to process the workpiece W fixed on the table 136.

The motor driver 111R successively receives input of a target rotational speed from the CNC unit 30, and controls the motor 112R. The motor 112R rotates the spindle 132 about the Z axis. The motor 112R may be an AC motor, a stepping motor, a servomotor, or any other type of motor.

In the case where the motor 112R is a servomotor, the motor driver 111R calculates an actual rotational speed of the motor 112R based on a feedback signal received from an encoder (not shown) for detecting a rotation angle of the motor 112R. When the calculated actual rotational speed is lower than the target rotational speed, the motor driver 111R increases the rotational speed of the motor 112R, and when the calculated actual rotational speed is higher than the target rotational speed, the motor driver 111R reduces the rotational speed of the motor 112R. As described above, the motor driver 111R makes the rotational speed of the motor 112R closer to the target rotational speed by successively receiving feedback about the rotational speed of the motor 112R.

The motor driver 111X successively receives input of a target position from the CNC unit 30, and controls the motor 112X. The motor 112X drives the movable body 113, to which the spindle head 131 is attached, via a ball screw (not shown) to move the spindle 132 to a desired position in the X-axis direction. The method for controlling the motor 112X by the motor driver 111X is similar to that described above about the motor driver 111R, and a redundant description thereof is omitted. The motor 112X may be an AC motor, a stepping motor, a servomotor, or any other type of motor.

The motor driver 111Y successively receives input of a target position from the CNC unit 30, and controls the motor 112Y. The motor 112Y drives the movable body 113, to which the spindle head 131 is attached, via a ball screw (not shown) to move the spindle 132 to a desired position in the Y-axis direction. The method for controlling the motor 112Y by the motor driver 111Y is similar to that described above about the motor driver 111R, and a redundant description thereof is omitted. The motor 112Y may be an AC motor, a stepping motor, a servomotor, or any other type of motor.

The motor driver 111Z successively receives input of a target position from the CNC unit 30, and controls the motor 112Z. The motor 112Z drives the movable body 113, to which the spindle head 131 is attached, via a ball screw (not shown) to move the spindle 132 to a desired position in the Z-axis direction. The method for controlling the motor 112Z by the motor driver 111Z is similar to that described above about the motor driver 111R, and a redundant description thereof is omitted. The motor 112Z may be an AC motor, a stepping motor, a servomotor, or any other type of motor.

### D. Internal Structure of Mist Collector 40

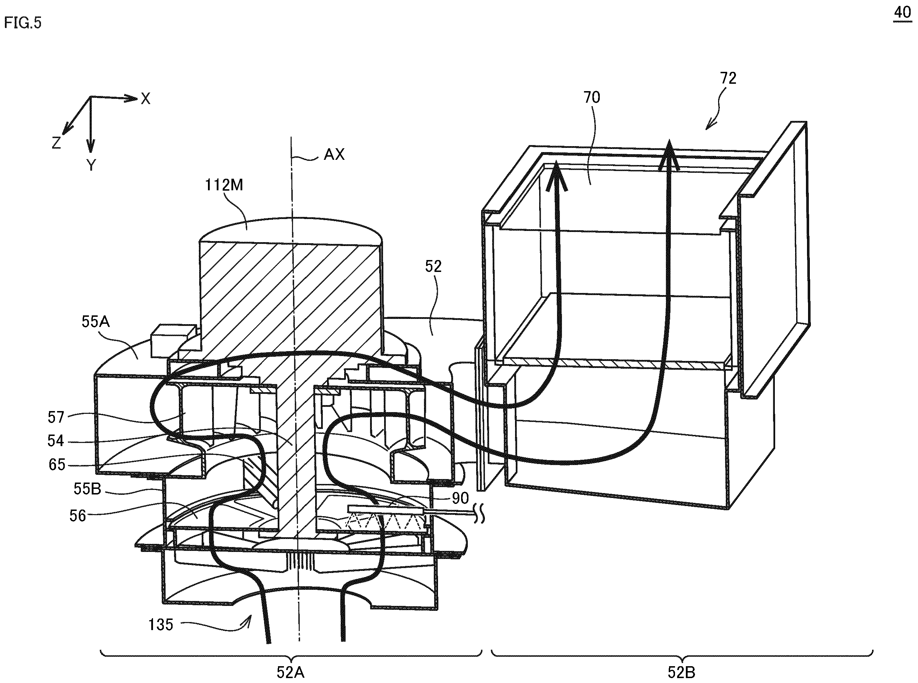

Next, the following describes an internal structure of the mist collector 40 with reference to FIG. 5. FIG. 5 is a diagram showing a cross section of the mist collector 40 shown in FIG. 1.

The mist collector 40 includes a housing 52. The housing 52 includes the opening 135 that serves as an air intake port. The mist collector 40 introduces minute substances included in air within the processing area AR1 via the opening 135 into the housing 52.

The inside of the housing 52 is divided into a first filtering area 52A and a second filtering area 52B. Minute substances collected from the processing area AR1 pass through the first filtering area 52A and the second filtering area 52B in this order.

The first filtering area 52A is constituted by a tubular portion 55A and a tubular portion 55B. The tubular portion 55A is coupled to the tubular portion 55B. The tubular portion 55A and the tubular portion 55B are coaxially arranged with an axis AX as a central axis.

Hereinafter, a direction orthogonal to the axis AX will also be referred to as a "radial direction". Typically, an inner radius of the tubular portion 55A in the radial direction is longer than an inner radius of the tubular portion 55B in the radial direction.

A shaft 54 is housed in the first filtering area 52A. A rotary filter 56 and a fan 57 are fixed to the shaft 54. The shaft 54 is connected to the above-described motor 112M and configured to be rotatable about the axis AX. With this configuration, the shaft 54 functions as a rotation shaft and rotates the rotary filter 56 and the fan 57 together.

The rotary filter 56 is housed in the tubular portion 55A of the housing 52. The radial direction of the rotary filter 56 is orthogonal to an inner surface of the tubular portion 55A. The term "orthogonal" as used here can encompass not only 90° but also substantially 90°. That is, an angle between the radial direction of the rotary filter 56 and the inner surface of the tubular portion 55A may be 90° or substantially 90° (for example, 85° or more and 95° or less).

The fan 57 is housed in the tubular portion 55B of the housing 52. The fan 57 functions as a moving blade for creating a flow of air passing through the rotary filter 56. That is, minute substances in the processing area AR1 are directed to the rotary filter 56 as a result of the fan 57 rotating. The rotary filter 56 blows off the minute substances colliding with the rotary filter 56 in the radial direction with centrifugal force. Thus, the minute substances are caught by the rotary filter 56. The minute substances caught by the rotary filter 56 are returned into the machine tool 100, for example.

Also, a washing mechanism 90 is housed in the tubular portion 55B of the housing 52. The washing mechanism 90 is a mechanism for washing the rotary filter 56 by ejecting a fluid onto the rotary filter 56.

The washing mechanism 90 is located between the rotary filter 56 and the fan 57 in the direction of the axis AX. In other words, the washing mechanism 90 is downstream of the rotary filter 56 in the direction of a flow of air passing through the rotary filter 56 and upstream of the fan 57 in the direction of a flow of air passing through the fan 57.

A coolant is supplied to the washing mechanism 90 from a coolant tank (not shown) beside the machine tool 100. The coolant supplied to the washing mechanism 90 is ejected through an ejection port of the washing mechanism 90 onto the rotary filter 56. Thus, the washing mechanism 90 removes minute substances attached to a downstream side of the rotary filter 56 from an upstream side of the rotary filter 56. The removed minute substances are returned to the processing area AR1 of the machine tool 100 via the above-described opening 135.

Note that the fluid ejected from the washing mechanism 90 onto the rotary filter 56 is not limited to the coolant, and may also be air, for example.

A multilayer filter 70 is housed in the second filtering area 52B. Unlike the rotary filter 56, the multilayer filter 70 is stationary. The multilayer filter 70 catches minute substances that have passed through the rotary filter 56.

As described above, minute substances sucked from the processing area AR1 into the mist collector 40 pass through the rotary filter 56, the fan 57, and the multilayer filter 70 in this order. Accordingly, air from which minute substances have been removed is discharged from an exhaust port 72.

### E. Configuration of Collection Mechanism 150

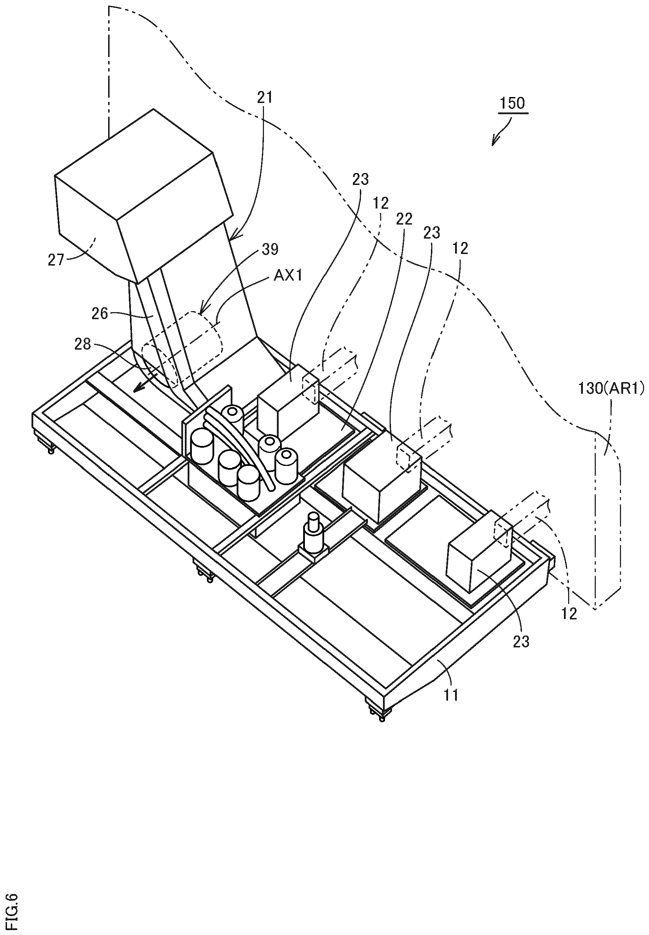

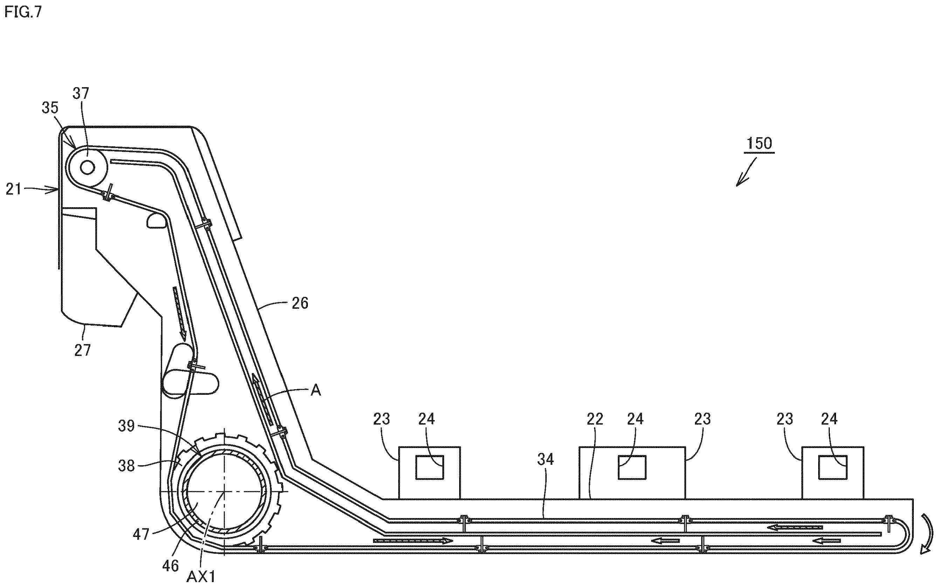

Next, the following describes the collection mechanism 150 included in the machine tool 100 with reference to FIGS. 6 and 7. FIG. 6 is a diagram showing an appearance of the collection mechanism 150. FIG. 7 is a diagram showing a cross section of the collection mechanism 150.

The collection mechanism 150 is provided beside the cover body 130 defining the processing area AR1. The collection mechanism 150 receives chips from a workpiece and the coolant discharged from the processing area AR1.

The collection mechanism 150 includes a collection tank 11. The collection tank 11 is configured to be capable of storing the coolant therein. The collection mechanism 150 conveys chips to a chip bucket (not shown) and discharges clean coolant to the collection tank 11 by filtering the coolant.

The collection mechanism 150 also includes a cover body 21. The cover body 21 forms the appearance of the collection mechanism 150. The cover body 21 has the shape of a housing including an internal space.

The cover body 21 is composed of a horizontal section 22, chip receiving sections 23, a standing section 26, and a chip discharge part 27.

The cover body 21 as a whole is bent between the horizontal section 22 and the standing section 26. The horizontal section 22 is placed in the collection tank 11. The horizontal section 22 has the appearance of a plate extending in the horizontal direction. The horizontal section 22 has a rectangular shape in a plan view. The standing section 26 stands up from one end of the horizontal section 22 in the longitudinal direction thereof and extends diagonally upward.

The chip receiving sections 23 are provided on the horizontal section 22. The chip receiving sections 23 are constituted by boxes provided on a top surface of the horizontal section 22. Connection ports 24 are respectively provided in the chip receiving sections 23. The connection ports 24 are through holes extending through the chip receiving sections 23. Chip conveying devices 12 provided in the processing area AR1 are connected to the chip receiving sections 23 via the connection ports 24. The chip conveying devices 12 include gutter bodies extending in one direction and spiral conveyors provided in the gutter bodies, for example.

The chip discharge part 27 is provided at an end portion of the standing section 26 extending diagonally upward from the horizontal section 22. The chip discharge part 27 is an opening in the cover body 21, which is open vertically downward. A chip bucket (not shown) for collecting chips is placed under the chip discharge part 27. Chips from a workpiece discharged from the processing area AR1 are received by the cover body 21 via the chip receiving sections 23. The chips are conveyed by a chip conveying mechanism, which will be described below, in the cover body 21, discharged from the chip discharge part 27, and collected in the chip bucket.

The collection mechanism 150 further includes a chip conveying unit 35. The chip conveying unit 35 is housed in the cover body 21. The chip conveying unit 35 is a device for conveying chips in the cover body 21.

More specifically, the chip conveying unit 35 includes a pair of endless chains 34, a driving sprocket 37, and a driven sprocket 38.

The driving sprocket 37 is provided at the end portion of the standing section 26 extending diagonally upward from the horizontal section 22. The driving sprocket 37 is located above the chip discharge part 27. The driving sprocket 37 is supported in such a manner as to be rotatable about an axis extending in a direction (hereinafter, this direction will also be referred to as a "width direction of the collection mechanism 150") that is orthogonal to the sheet of FIG. 7. An output shaft of the above-described motor 112A (see FIG. 4) is coupled to the driving sprocket 37. The driving sprocket 37 rotates in response to motive power being transmitted from the motor 112A.

The driven sprocket 38 is provided in the bent portion between the horizontal section 22 and the standing section 26. The driven sprocket 38 is supported in such a manner as to be rotatable about an axis (axis AX1) extending in the width direction of the collection mechanism 150.

The pair of endless chains 34 are arranged in parallel to each other with a distance therebetween in the width direction of the collection mechanism 150. The endless chains 34 are routed within the cover body 21 so as to form rings passing through the horizontal section 22 and the standing section 26. The endless chains 34 are routed within the cover body 21 in such a manner as to reciprocate between positions corresponding to the chip receiving sections 23 and a position corresponding to the chip discharge part 27.

The endless chains 34 are wound around the driving sprocket 37 and the driven sprocket 38 and guided by a plurality of guide members on their route within the cover body 21. When the driving sprocket 37 rotates in response to receiving motive power from the motor 112A, the endless chains 34 circulate in the direction of arrows A (hatched arrows) shown in FIG. 7.

The collection mechanism 150 also includes a filtration mechanism 39. The filtration mechanism 39 is configured to discharge clean coolant from the cover body 21 to the collection tank 11 by filtering the coolant received from the processing area AR1.

More specifically, the filtration mechanism 39 includes a drum-shaped filter 46. The filter 46 is housed in the cover body 21. The filter 46 is provided in the bent portion between the horizontal section 22 and the standing section 26. The filter 46 is configured to be capable of catching foreign matter such as chips included in the coolant. The filter 46 has a cylindrical shape, for example, and has an internal space 47 therein.

The drum-shaped filter 46 is disposed in such a manner that the central axis of the filter 46 extends in the width direction of the collection mechanism 150. The filter 46 is disposed in such a manner that the central axis of the filter 46 coincides with the axis AX1, which is the rotation center of the driven sprocket 38. Both ends of the filter 46 in the direction of the axis AX1 are connected to the driven sprocket 38.

Note that the above-described filter 46 has a drum shape, but the shape of the filter 46 is not limited to a drum shape. For example, the filter 46 may also have a rectangular shape or a circular shape.

A coolant discharge part 28 is provided in the cover body 21. The coolant discharge part 28 is a through hole extending through the cover body 21. The coolant discharge part 28 is provided to bring the internal space 47 of the filter 46 into communication with an external space outside the cover body 21. The coolant received by the cover body 21 via the chip receiving sections 23 is filtered upon entering the internal space 47 of the filter 46. The filtered coolant is discharged to the coolant bath 11 via the coolant discharge part 28.

### F. Installation Site of Mist Sensor 80

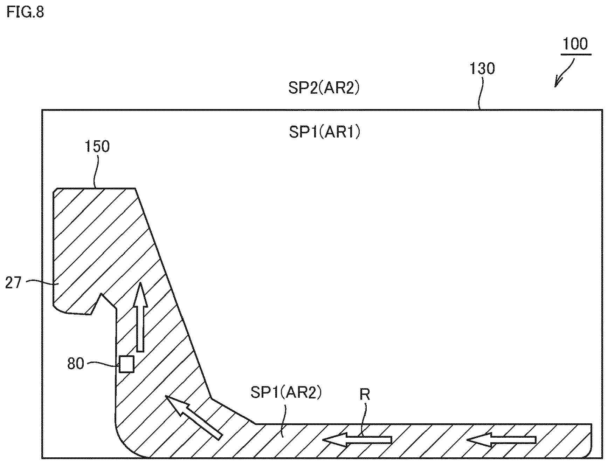

Next, the following describes an installation site of the mist sensor 80 inside the machine tool 100 with reference to FIG. 8. FIG. 8 is a diagram showing an example of the installation site of the mist sensor 80.

Hereinafter, the inside of the machine tool 100 will also be referred to as an "internal space SP1", and the outside of the machine tool 100 will also be referred to as an "external space SP2". Also, the region defined by the cover body 130 in the internal space SP1 of the machine tool 100 will also be referred to as the "processing area AR1". The region other than the processing area AR1 will also be referred to as a "region AR2 outside the processing area". The region AR2 outside the processing area includes the inside of the collection mechanism 150 and the external space SP2, for example.

As described above, the cover body 130 forms the appearance of the machine tool 100 and defines the processing area AR1 for a workpiece. Minute substances generated in the processing area AR1 may pass through a gap in the cover body 130 and leak to the region AR2 outside the processing area. The leakage of minute substances to the region AR2 outside the processing area indicates that a large amount of minute substances has been generated in the machine tool 100.

Therefore, the mist sensor 80 is provided in the region AR2 outside the processing area. The mist sensor 80 is a sensor for detecting minute substances flowing to the region AR2 outside the processing area. For example, the mist sensor 80 may be an optical sensor, an ultrasonic sensor, a camera, or any other sensor that can detect minute substances in the air. The machine tool 100 starts collection processing for collecting minute substances using the mist collector 40 when minute substances are detected by the mist sensor 80.

Accordingly, the collection processing for collecting minute substances using the mist collector 40 is not executed until minute substances are detected in the region AR2 outside the processing area. Consequently, the frequency of execution of the collection processing by the mist collector 40 is reduced, and power consumption by the mist collector 40 can be reduced.

In an aspect, the mist sensor 80 is provided inside the machine tool 100 (i.e., in the internal space SP1) in the region AR2 outside the processing area. In this case, the machine tool 100 can drive the mist collector 40 before minute substances leak to the external space SP2 so as to prevent leakage of minute substances to the external space SP2.

In the example shown in FIG. 8, the mist sensor 80 is provided inside the collection mechanism 150. The collection mechanism 150 is continuous to the processing area AR1 in the internal space SP1 of the machine tool 100. Typically, the collection mechanism 150 is in communication with the inside of the cover body 130 via the above-described chip receiving sections 23 (see FIG. 6). In other words, the inside of the cover body 21 forming the appearance of the collection mechanism 150 is in communication with the inside of the cover body 130 forming the processing area AR1. Therefore, minute substances generated in the processing area AR1 may flow into the collection mechanism 150. Minute substances that have entered the collection mechanism 150 flow in the direction of an arrow R toward the chip discharge part 27. The mist sensor 80 can detect minute substances that have entered the collection mechanism 150. Accordingly, the machine tool 100 can prevent leakage of minute substances from the collection mechanism 150.

Note that the installation site of the mist sensor 80 is not limited to the inside of the collection mechanism 150. The mist sensor 80 can be provided at various sites to which minute substances may leak from the processing area AR1.

### G. Functional Configuration of Machine Tool 100

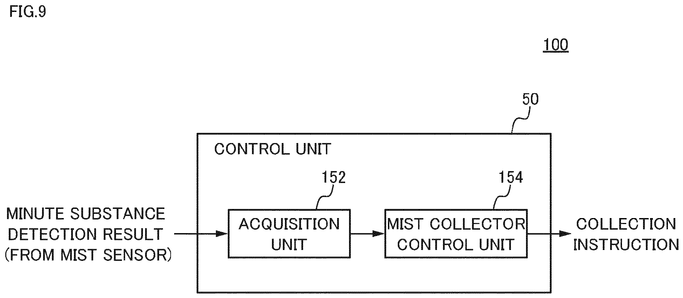

Next, a functional configuration of the machine tool 100 is described below with reference to FIGS. 9 to 12. FIG. 9 is a diagram showing an example of the functional configuration of the machine tool 100.

The control unit 50 of the machine tool 100 includes an acquisition unit 152 and a mist collector control unit 154 serving as functional units. The following describes functions of the acquisition unit 152 and the mist collector control unit 154 in this order.

### G1. Acquisition Unit 152

First, the following describes functions of the acquisition unit 152. The acquisition unit 152 may be implemented by the above-described CPU unit 20 or the above-described CNC unit 30.

The acquisition unit 152 acquires a detection result from the above-described mist sensor 80. The mist sensor 80 detects the amount of mist included in air. For example, the mist sensor 80 outputs a larger value as the amount of minute substances included in air increases, and outputs a smaller value as the amount of minute substances included in air decreases. The detection result acquired by the acquisition unit 152 is output to the mist collector control unit 154.

### G2. Mist Collector Control Unit 154

Next, the following describes functions of the mist collector control unit 154 shown in FIG. 9. The mist collector control unit 154 may be implemented by the above-described CPU unit 20 or the above-described CNC unit 30.

The mist collector control unit 154 gives a control instruction to the above-described motor driver 111M based on the detection result acquired from the mist sensor 80. Thus, the mist collector control unit 154 controls the mist collector 40 via the motor driver 111M.

For example, the mist collector control unit 154 adjusts the amount of minute substances collected by the mist collector 40 per unit time (hereinafter also referred to as a "collection rate") before and after minute substances are detected by the mist sensor 80. Typically, when minute substances are detected by the mist sensor 80, the mist collector control unit 154 controls the mist collector 40 such that the collection rate of the mist collector 40 is higher than that before detection of the minute substances. Thereafter, when minute substances are no longer detected by the mist sensor 80, the mist collector control unit 154 controls the mist collector 40 such that the collection rate of the mist collector 40 is lower than that during a period for which the minute substances were detected.

The collection rate of the mist collector 40 can be adjusted by adjusting the rotational speed of the fan 57 included in the mist collector 40, for example. More specifically, the higher the rotational speed of the fan 57 included in the mist collector 40 is, the higher the collection rate of the mist collector 40 is. On the other hand, the lower the rotational speed of the fan 57 included in the mist collector 40 is, the lower the collection rate of the mist collector 40 is.

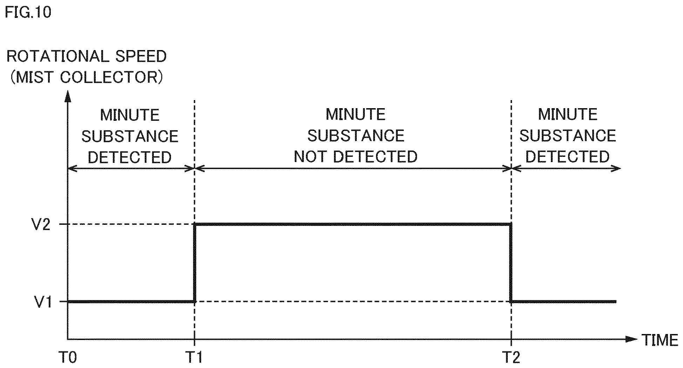

The following describes an example of the manner in which the mist collector 40 is controlled with reference to FIG. 10. FIG. 10 is a graph showing an example of the manner in which the mist collector 40 is controlled.

The horizontal axis of the graph shown in FIG. 10 shows time. The vertical axis of the graph shown in FIG. 10 shows the rotational speed of the fan 57 included in the mist collector 40.

In an example, the mist sensor 80 outputs a value not larger than a threshold value determined in advance, during a period from a timing "T0" to a timing "T1". During this period, the mist collector control unit 154 sets the rotational speed of the fan 57 included in the mist collector 40 to "V1".

Thereafter, the mist sensor 80 outputs a value larger than the threshold value determined in advance, at the timing "T1". Based on this, the mist collector control unit 154 sets the rotational speed of the fan 57 included in the mist collector 40 to "V2". The rotational speed "V2" is higher than the rotational speed "V1".

Thereafter, the mist sensor 80 outputs a value not larger than the threshold value determined in advance, at a timing "T2". Based on this, the mist collector control unit 154 sets the rotational speed of the fan 57 included in the mist collector 40 to "V1" again.

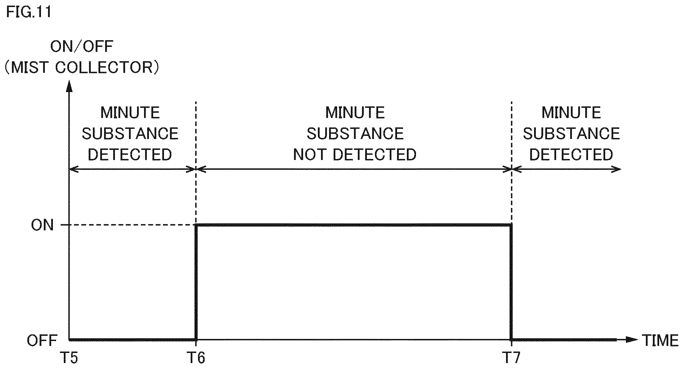

The following describes another example of the manner in which the mist collector 40 is controlled with reference to FIG. 11. FIG. 11 is a graph showing another example of the manner in which the mist collector 40 is controlled.

The horizontal axis of the graph shown in FIG. 11 shows time. The vertical axis of the graph shown in FIG. 11 shows execution states of the mist collector 40. In the example shown in FIG. 11, "ON" indicates a state in which the collection processing for collecting minute substances is executed by the mist collector 40, and "OFF" indicates a state in which the collection processing for collecting minute substances is not executed by the mist collector 40. When the mist collector 40 is in the "OFF" state, the rotational speed of the fan 57 is zero.

In an example, the mist sensor 80 outputs a value not larger than a threshold value determined in advance, during a period from a timing "T5" to a timing "T6". During this period, the mist collector control unit 154 switches the mist collector 40 off.

Thereafter, the mist sensor 80 outputs a value larger than the threshold value determined in advance, at the timing "T6". Based on this, the mist collector control unit 154 switches the mist collector 40 on. For example, the mist collector control unit 154 sets the rotational speed of the fan 57 included in the mist collector 40 to "V2" described above.

Thereafter, the mist sensor 80 outputs a value not larger than the threshold value determined in advance, at a timing "T7". Based on this, the mist collector control unit 154 switches the mist collector 40 off.

Note that the mist collector control unit 154 does not necessarily have to control the collection rate of the mist collector 40 between two stages. For example, the mist collector control unit 154 may control the collection rate of the mist collector 40 between three or more stages according to values output by the mist sensor 80.

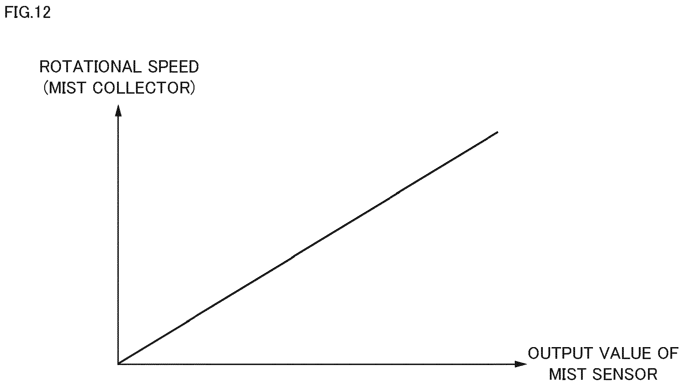

FIG. 12 is a diagram showing a relationship between a value output by the mist sensor 80 and a rotational speed of the fan 57 included in the mist collector 40.

As shown in FIG. 12, the mist collector control unit 154 increases the rotational speed of the mist collector 40 as the value output by the mist sensor 80 increases. In other words, the mist collector control unit 154 reduces the rotational speed of the mist collector 40 as the value output by the mist sensor 80 decreases.

The correspondence between a value output by the mist sensor 80 and a rotational speed of the fan 57 included in the mist collector 40 is determined in advance. In an aspect, the correspondence is defined by a table in which the rotational speed of the fan 57 is associated with the value output by the mist sensor 80. In another aspect, the correspondence is defined by a relational expression that includes the value output by the mist sensor 80 as an explanatory variable and the rotational speed of the fan 57 as an objective variable.

### H. Hardware Configuration of CPU Unit 20

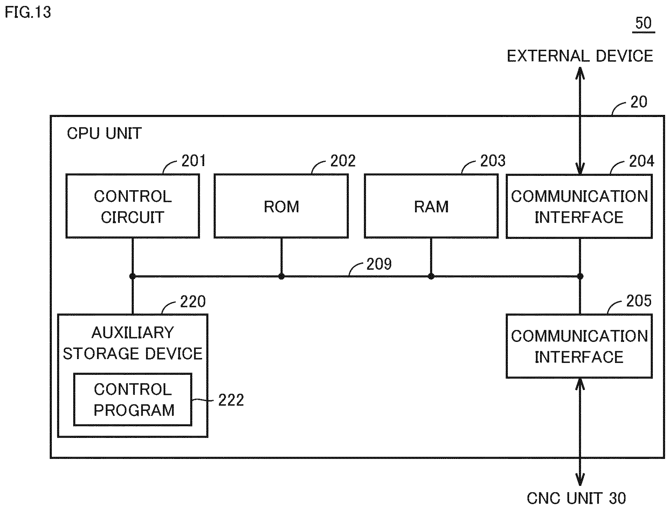

Next, the following describes a hardware configuration of the CPU unit 20 shown in FIG. 4 with reference to FIG. 13. FIG. 13 is a diagram showing an example of the hardware configuration of the CPU unit 20.

The CPU unit 20 includes a control circuit 201, a ROM (Read Only Memory) 202, a RAM (Random Access Memory) 203, communication interfaces 204 and 205, and an auxiliary storage device 220. These components are connected to an internal bus 209.

The control circuit 201 is constituted by at least one integrated circuit, for example. The integrated circuit may be constituted by at least one CPU, at least one GPU (Graphics Processing Unit), at least one ASIC (Application Specific Integrated Circuit), at least one FPGA (Field Programmable Gate Array), or a combination of any of these.

The control circuit 201 controls operations of the CPU unit 20 by executing various programs such as a control program 222. The control program 222 defines instructions for controlling various devices included in the machine tool 100. The control circuit 201 reads out the control program 222 from the auxiliary storage device 220 or the ROM 202 into the RAM 203 upon receiving an instruction for executing the control program 222. The RAM 203 functions as a working memory in which various types of data necessary for executing the control program 222 are temporarily stored.

The communication interface 204 is an interface for realizing communication performed with use of a LAN (Local Area Network) cable, a WLAN (Wireless LAN), Bluetooth (registered trademark), or the like. For example, the CPU unit 20 communicates with external devices such as the above-described pump 109 and the above-described motor drivers 111A and 111M via the communication interface 305.

The communication interface 205 is an interface for realizing communication with various units connected to a field bus. Examples of the units connected to the field bus include the CNC unit 30 and an I/O unit (not shown).

The auxiliary storage device 220 is a storage medium such as a hard disk or a flash memory. Various types of information such as the control program 222 are stored in the auxiliary storage device 220. For example, the control program 222 includes an instruction code for specifying a coolant ejection amount or pressure of the above-described washing mechanism 90 and an instruction code for specifying ON or OFF of ejection of the coolant from the above-described washing mechanism 90. In another example, the control program 222 includes an instruction code for specifying ON or OFF of rotation of the fan 57 included in the mist collector 40 and an instruction code for specifying the rotational speed of the fan 57 included in the mist collector 40. In another example, the control program 222 includes an instruction code for specifying a coolant ejection amount or pressure of the above-described ejection part 125 and an instruction code for specifying ON or OFF of ejection of the coolant from the above-described ejection part 125.

There is no limitation to the configuration in which the control program 222 is stored in the auxiliary storage device 220, and the control program 222 may also be stored in a storage region (e.g., a cash memory) of the control circuit 201, the ROM 202, the RAM 203, an external device (e.g., a server), or the like.

Note that the control program 222 may be provided by being incorporated into another program, rather than being provided as a single program. In this case, various types of processing according to the present embodiment are realized through cooperation between the control program and the other program. Even such a program that does not include some modules does not deviate from the gist of the control program 222 according to the present embodiment. Also, some or all functions provided by the control program 222 may be realized by dedicated hardware. Also, the CPU unit 20 may be configured in such a manner that a part of the processing performed by the control program 222 is executed by at least one server, as is the case with a so-called cloud service.

### I. Hardware Configuration of CNC Unit 30

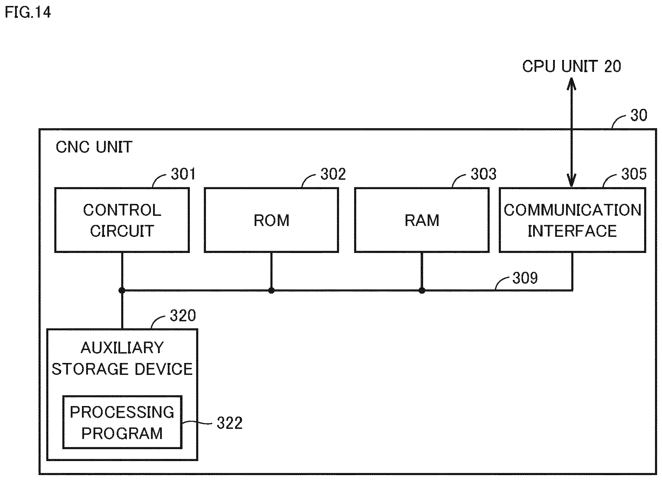

Next, the following describes a hardware configuration of the CNC unit 30 shown in FIG. 4 with reference to FIG. 14. FIG. 14 is a diagram showing an example of the hardware configuration of the CNC unit 30.

The CNC unit 30 includes a control circuit 301, a ROM 302, a RAM 303, a communication interface 305, a communication interface 305, and an auxiliary storage device 320. These components are connected to an internal bus 309.

The control circuit 301 is constituted by at least one integrated circuit, for example. The integrated circuit may be constituted by at least one CPU, at least one ASIC, at least one FPGA, or a combination of any of these, for example.

The control circuit 301 controls operations of the CNC unit 30 by executing various programs such as a processing program 322. The processing program 322 is a program for realizing processing of a workpiece. The control circuit 301 reads out the processing program 322 from the ROM 302 into the RAM 303 upon receiving an instruction for executing the processing program 322. The RAM 303 functions as a working memory in which various types of data necessary for executing the processing program 322 are temporarily stored.

The communication interface 305 is an interface for realizing communication performed with use of a LAN, a WLAN, Bluetooth (registered trademark), or the like. For example, the CNC unit 30 communicates with the CPU unit 20 via the communication interface 305. Also, the CNC unit 30 communicates with various driving units (e.g., the motor drivers 111R and 111X to 111Z) for processing a workpiece via the communication interface 305 or another communication interface.

The auxiliary storage device 320 is a storage medium such as a hard disk or a flash memory. The processing program 322 and the like are stored in the auxiliary storage device 320. There is no limitation to the configuration in which the processing program 322 is stored in the auxiliary storage device 320, and the processing program 322 may also be stored in a storage region (e.g., a cash memory) of the control circuit 301, the ROM 302, the RAM 303, an external device (e.g., a server), or the like.

### J. Control Flow

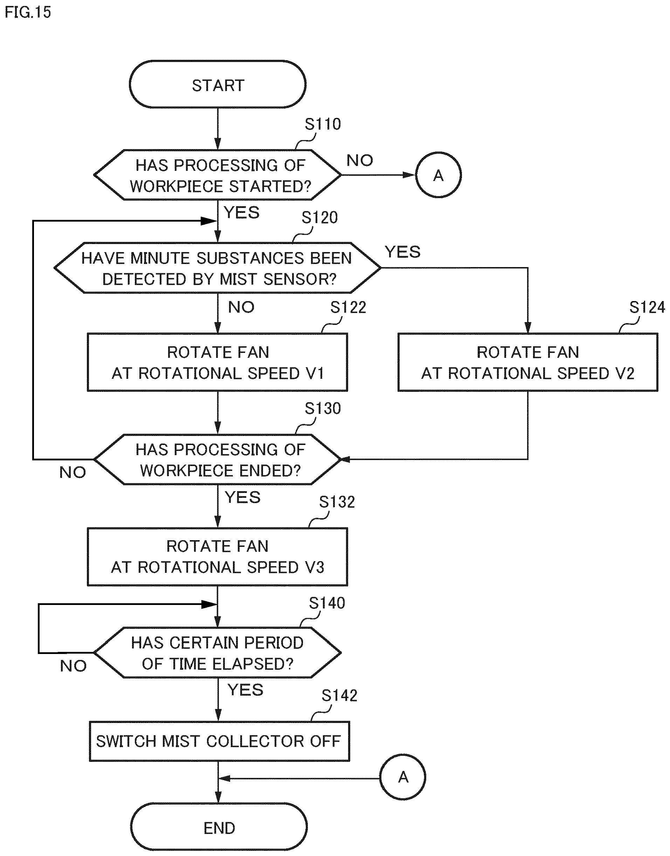

Next, the following describes a control flow of the mist collector 40 with reference to FIG. 15. FIG. 15 is a flowchart showing a part of processing executed by the control unit 50 of the machine tool 100.

The processing shown in FIG. 15 is realized as a result of the control unit 50 of the machine tool 100 executing the control program. In another aspect, a part or all of the processing may be executed by a circuit element or another piece of hardware.

In step S110, the control unit 50 determines whether or not processing of a workpiece has started. For example, the control unit 50 determines that processing of a workpiece has started based on the fact that execution of the processing program 322 has started. Upon determining that processing of a workpiece has started (YES in step S110), the control unit 50 switches control to step S120. Otherwise (NO in step S110), the control unit 50 ends the processing shown in FIG. 15.

In step S120, the control unit 50 functions as the above-described acquisition unit 152 and determines whether or not output from the mist sensor 80 indicates that minute substances have been detected. For example, the control unit 50 determines that minute substances have been detected based on the fact that a value output from the mist sensor 80 is larger than a value determined in advance. Upon determining that minute substances have been detected (YES in step S120), the control unit 50 switches control to step S124. Otherwise (NO in step S120), the control unit 50 switches control to step S122.

In step S122, the control unit 50 functions as the above-described mist collector control unit 154 and adjusts the collection rate of minute substances by the mist collector 40. For example, the control unit 50 controls the motor driver 111M to rotate the fan 57 included in the mist collector 40 at the rotational speed "V1" determined in advance. The rotational speed "V1" is lower than the rotational speed "V2" in step S124 described below.

In step S124, the control unit 50 functions as the above-described mist collector control unit 154 and adjusts the collection rate of minute substances by the mist collector 40. For example, the control unit 50 controls the motor driver 111M to rotate the fan 57 included in the mist collector 40 at the rotational speed "V2" determined in advance. The rotational speed "V2" is higher than the rotational speed "V1" in step S122 described above.

In step S130, the control unit 50 determines whether or not processing of the workpiece has ended. For example, the control unit 50 determines that processing of the workpiece has ended based on the fact that execution of the processing program 322 has ended. Upon determining that processing of the workpiece has ended (YES in step S130), the control unit 50 switches control to step S132. Otherwise (NO in step S130), the control unit 50 returns to step S120.

In step S132, the control unit 50 functions as the above-described mist collector control unit 154 and adjusts the collection rate of minute substances by the mist collector 40. For example, the control unit 50 controls the motor driver 111M to rotate the fan 57 included in the mist collector 40 at the rotational speed "V3" determined in advance. The rotational speed "V3" is higher than the rotational speed "V1" in step S122 described above, and lower than the rotational speed "V2" in step S124 described above, for example.

In step S140, the control unit 50 functions as the above-described mist collector control unit 154 and determines whether or not a certain period of time has elapsed from when the rotational speed of the fan 57 included in the mist collector 40 was set to "V3". Upon determining that the certain period of time has elapsed (YES in step S140), the control unit 50 switches control to step S142. Otherwise (NO in step S140), the control unit 50 executes the processing in step S140 again.

In step S142, the control unit 50 functions as the above-described mist collector control unit 154 and switches the mist collector 40 off. As a result, the mist collector 40 stops the collection processing for collecting minute substances.

### K. Variation

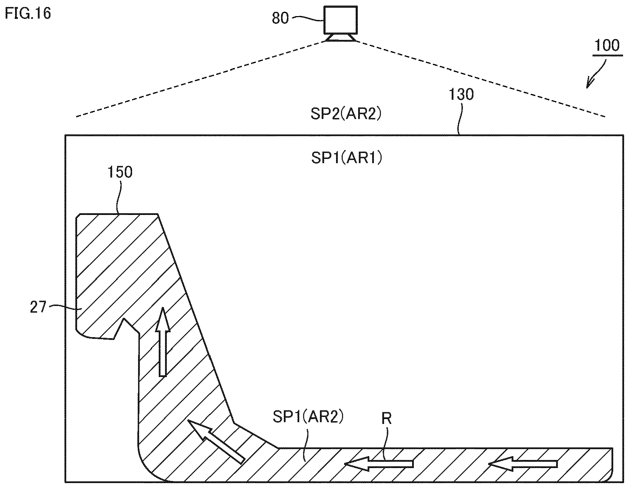

Next, the following describes a variation of the machine tool 100 with reference to FIG. 16. FIG. 16 is a diagram showing another example of the installation site of the mist sensor 80.

In the above-described example shown in FIG. 8, the mist sensor 80 is installed inside the machine tool 100. In contrast, a mist sensor 80 according to this variation is installed outside the machine tool 100. That is, the mist sensor 80 is installed in the external space SP2.

FIG. 16 shows an example of the mist sensor 80, which is a camera. The camera is installed in such a manner that a shooting field of view of the camera encompasses a part of the machine tool 100 or the whole machine tool 100. For example, the camera is installed on a wall or the ceiling of a plant in which the machine tool 100 is installed. The number of machine tools 100 encompassed in the shooting field of view of the camera may be one or two or more.

The machine tool 100 according to this variation successively obtains images from the mist sensor 80, which is a camera, and performs image processing determined in advance on the images. Thus, the machine tool 100 detects leakage of minute substances to the external space SP2 outside the machine tool 100. A suitable image processing program can be adopted for detecting leakage of minute substances.

In an aspect, the machine tool 100 obtains a background image that does not include minute substances in advance. Upon obtaining an input image that is obtained by shooting an image of the machine tool 100 from the same point of view as the point of view of the background image, the machine tool 100 obtains a difference between the input image and the background image. Thus, the machine tool 100 obtains a background-subtracted image by subtracting the background from the input image. The machine tool 100 extracts regions that have pixel values larger than a predetermined value from the background-subtracted image. When the size of a region is larger than a predetermined threshold value, the machine tool 100 then determines that minute substances are leaking to the external space SP2. On the other hand, when the size of the regions is not larger than the predetermined threshold value, the machine tool 100 determines that no minute substances are leaking to the external space SP2.

In another aspect, the machine tool 100 detects leakage of minute substances with use of a learned model. The learned model is generated in advance through learning processing with use of a learning data set. The learning data set includes a plurality of learning images including leaking minute substances. Also, labels indicating whether or not the images include leaking minute substances are associated with the respective learning images. Internal parameters of the learned model are optimized in advance through the learning processing performed with use of such a learning data set.

Various learning algorithms can be adopted as a learning method for obtaining the learned model. For example, it is possible to adopt, as such a learning algorithm, deep learning, a convolutional neural network (CNN), a fully convolutional network (FCN), a support vector machine, or the like.

The machine tool 100 inputs each image obtained from the mist sensor 80, which is the camera, to the learned model. As a result, the learned model outputs a probability of the image including leaking minute substances. When the probability is higher than a predetermined threshold value, the machine tool 100 determines that minute substances are leaking to the external space SP2. On the other hand, when the probability is not higher than the predetermined threshold value, the machine tool 100 determines that minute substances are not leaking to the external space SP2.

Upon determining that minute substances are leaking to the external space SP2, the machine tool 100 starts the collection processing for collecting minute substances using the mist collector 40. Thus, the machine tool 100 can immediately suppress leakage of minute substances to the external space SP2.

### L. Summary

As described above, the machine tool 100 includes the mist sensor 80 in the region AR2 outside the processing area, and detects minute substances leaking from the processing area AR1 to the region AR2 outside the processing area. The machine tool 100 starts the collection processing for collecting minute substances using the mist collector 40 when minute substances are detected by the mist sensor 80. Accordingly, the collection processing for collecting minute substances using the mist collector 40 is not executed until minute substances are detected in the region AR2 outside the processing area. Consequently, the frequency of execution of the collection processing by the mist collector 40 decreases, and power consumption by the mist collector 40 can be reduced.

The disclosed embodiment is an illustrative example in all aspects and should not be considered as restrictive. The scope of the present invention is defined not by the above descriptions but by the claims, and is intended to encompass all modifications within the meanings and scope that are equivalent to the claims.

### List of Reference Numerals

- 11: Collection tank
- 12: Chip conveying device
- 20: CPU unit
- 21: Cover body
- 22: Horizontal section
- 23: Chip receiving section
- 24: Connection port
- 26: Standing section
- 27: Chip discharge part
- 28: Coolant discharge part
- 30: CNC unit
- 34: Endless chain
- 35: Chip conveying unit
- 37: Driving sprocket
- 38: Driven sprocket
- 39: Filtration mechanism
- 40: Mist collector
- 46: Filter
- 47: Internal space
- 50: Control unit
- 52: Housing
- 52A: First filtering area
- 52B: Second filtering area
- 54: Shaft
- 55A: Tubular portion
- 55B: Tubular portion
- 56: Rotary filter
- 57: Fan
- 70: Multilayer filter
- 72: Exhaust port
- 80: Mist sensor
- 90: Washing mechanism
- 100: Machine tool
- 109: Pump
- 111A: Motor driver
- 111M: Motor driver
- 111R: Motor driver
- 111X: Motor driver
- 111Y: Motor driver
- 111Z: Motor driver
- 112A: Motor
- 112M: Motor
- 112R: Motor
- 112X: Motor
- 112Y: Motor
- 112Z: Motor
- 113: Movable body
- 125: Ejection part
- 125A: Ejection mechanism
- 125B: Ejection mechanism
- 130: Cover body
- 131: Spindle head
- 132: Spindle
- 133: Housing
- 134: Tool
- 135: Opening
- 136: Table
- 150: Collection mechanism
- 152: Acquisition unit
- 154: Mist collector control unit
- 201: Control circuit
- 202: ROM
- 203: RAM
- 204: Communication interface
- 205: Communication interface
- 209: Internal bus
- 220: Auxiliary storage device
- 222: Control program
- 301: Control circuit
- 302: ROM
- 303: RAM
- 305: Communication interface
- 309: Internal bus
- 320: Auxiliary storage device
- 322: Processing program

## Claims

1. A machine tool comprising:
a cover body defining a processing area inside the machine tool;
an ejection part configured to eject a coolant into the processing area;
a mist collector configured to collect a substance included in air as a result of the coolant being ejected from the ejection part into the processing area;
a sensor provided outside the processing area and configured to detect the substance; and
a mist collector control unit configured to cause the mist collector to start collection processing for collecting the substance when the substance is detected by the sensor.

2. The machine tool according to claim 1,
wherein the sensor is provided inside the machine tool and outside the processing area.

3. The machine tool according to claim 2, further comprising
a collection mechanism configured to collect the coolant ejected from the ejection part into the processing area, the collection mechanism being continuous to the processing area inside the machine tool,
wherein the sensor is provided inside the collection mechanism.

4. The machine tool according to claim 1,
wherein the sensor is provided outside the machine tool.

5. The machine tool according to any one of claims 1 to 4,
wherein, when the substance is no longer detected by the sensor, the mist collector control unit controls the mist collector such that an amount of the substance collected by the mist collector per unit time becomes smaller than that during a period for which the substance has been detected by the sensor.

6. A control method for controlling a machine tool,
the machine tool including:
a cover body defining a processing area inside the machine tool;
an ejection part configured to eject a coolant into the processing area;
a mist collector configured to collect a substance included in air as a result of the coolant being ejected from the ejection part into the processing area; and
a sensor provided outside the processing area and configured to detect the substance,
the control method comprising:
a step of acquiring output from the sensor; and
a step of starting collection processing for collecting the substance using the mist collector when the output indicates that the substance has been detected.

7. A control program for controlling a machine tool,
the machine tool including:
a cover body defining a processing area inside the machine tool;
an ejection part configured to eject a coolant into the processing area;
a mist collector configured to collect a substance included in air as a result of the coolant being ejected from the ejection part into the processing area; and
a sensor provided outside the processing area and configured to detect the substance,
wherein the control program causes the machine tool to execute:
a step of acquiring output from the sensor; and
a step of starting collection processing for collecting the substance using the mist collector when the output indicates that the substance has been detected.
